Europäisches Patentamt

**European Patent Office**

**Office européen des brevets**

(19)

(11) Veröffentlichungsnummer: **0 062 280**
A1

# (12) EUROPÄISCHE PATENTANMELDUNG

(21) Anmeldenummer: **82102654.9**

(22) Anmeldetag: **30.03.82**

(51) Int. Cl.³: **F 16 B 13/06**

(30) Priorität: **30.03.81 DE 3112638**

(43) Veröffentlichungstag der Anmeldung: **13.10.82**
Patentblatt 82/41

(84) Benannte Vertragsstaaten: **AT CH FR IT LI**

(71) Anmelder: **Tox-Dübel-Werk R.W. Heckhausen GmbH & Co. KG, D-7762 Bodman-Ludwigshafen (DE)**

(72) Erfinder: **Riedel, Josef, Hutbühlstrasse 6, D-7770 Überlingen 12 (DE)**

(74) Vertreter: **Koch, Günther, Dipl.-Ing. et al, Kaufingerstrasse 8, D-8000 München 2 (DE)**

(54) **Schwerlastanker.**

(57) Bei einem aus einem Gewindebolzen (10) und zwei Spreizkonen (26, 18) sowie einer darüber liegenden geteilten Spreizhülse (22) bestehenden Schwerlastanker ist zwischen den zusammenwirkenden Aussen- und Innenkonusflächen eine in axialer Richtung wirkende Rücklaufsicherung vorgesehen, die nach erfolgter Spreizung der Hülse (22) infolge axialer Verspannung ein Nachlassen der Spreizwirkung verhindert. Diese Rücklaufsicherung wird durch einen Formschlusseingriff bewirkt, der vorzugsweise durch Eingraben von sägezahnartigen Ringrillen (42) oder Schraubrillen gebildet ist.

Zur Gewährleistung eines ausreichenden Verschiebeweges und um eine Verspannung der zu befestigenden Gegenstände gegen die Wand zu ermöglichen, ist eine Montagehülse (34) zwischen Distanzhülse (30) und Mutter (14) bzw. Bolzenkopf vorgesehen.

## Schwerlastanker

Die Erfindung bezieht sich auf einen Schwerlastanker mit einem Gewindebolzen, einem hinteren auf dem Gewindebolzen aufgeschraubten Schraubkonus mit einem vorderen, auf dem Gewindebolzen verschiebbaren Gleitkonus, mit einer innen doppelt konisch ausgebildeten Spreizhülse, die mit den beiden Konen zusammenwirkt und mit einer am vorderen Gleitkonus stirnseitig abgestützten Distanzhülse. Bei derartigen Schwerlastankern wird die Spreizhülse mittels der beiden Konen im Bohrloch radial aufgespreizt und dadurch verankert. Da die Konusflächen nicht selbsthemmend ausgebildet werden können, wird die Spreizwirkung nach Lösen des befestigten Gegenstandes wieder aufgehoben. Um dieses Lösen zu vermeiden ist es bekannt, über eine Rundmutter die Distanzhülse gegen den Gleitkonus zu verspannen, so daß auch nach Abnahme der Mutter die Spreizwirkung erhalten bleibt. Derartige Schwerlastanker erfordern jedoch eine schwierige Montage und Spezialwerkzeuge zum Anziehen der Mutter.

Bei den Schwerlastankern ohne Sicherungsmutter wird bereits bei geringfügigen axialen Verschiebungen der vordere gewindelose Konus entlastet und die Parallelspreizung ist nicht mehr gegeben, sondern es wirkt nur noch der hintere Schraubkonus, der die Spreizhülse im Bohrloch verankert. Der vordere Gleitkonus wird dabei immer wertloser, je größer die axiale Verschiebung des Gewindebolzens relativ zur Spreizhülse wird. Die Spreizhülse macht in der Regel die axiale Verschiebung nicht mit. Eine solche Verschiebung kann schon durch geringes Nachsetzen des hinteren Konus in die verankerte Spreizhülse hervorgerufen werden, veranlaßt durch Vibration, Belastung in Verbindung mit Bohrstaub und dergleichen.

Es ist auch bekannt, unter der Spannmutter eine gewölbte Unterlagscheibe anzubringen, die verformt werden muß und dem Benutzer anzeigen soll, daß in deformiertem, d.h. flachgedrücktem Zustand die gewünschte Spreizung gewährleistet ist. Die Verschiebung könnte dadurch verhindert werden, daß der vordere Gleitkonus mit einer starken Druckschraubenfeder oder einer Tellerfeder oder dergleichen in die Spreizhülse während der Montage eingedrückt wird. Hierdurch könnte ein Längenausgleich gewährleistet werden. Eine solche Ausbildung ist jedoch relativ teuer wenn die Federkraft über einen sehr langen Zeitraum gewährleistet werden soll.

Der Erfindung liegt daher die Aufgabe zugrunde, einen einfach und billig herzustellenden und leicht zu montierenden Schwerlastanker zu schaffen, bei dem die Verankerungsspreizkraft selbst dann erhalten bleibt, wenn die Befestigungsmutter oder die Kopfschraube zur Montage oder Demontage des zu befestigenden Gegenstandes abgeschraubt werden.

Gelöst wird die gestellte Aufgabe dadurch, daß wenigstens zwischen dem vorderen Gleitkonus und der Spreizhülse eine axiale Rücklaufsicherung eingebaut ist. Hierdurch wird erreicht, daß sich die beiden Konen relativ zur Spreizhülse axial nicht mehr verschieben können, nachdem vorher eine axiale Verspannung erfolgt und die Spreizhülse gegen die Bohrlochwandung gepreßt worden ist.

Die Rücklaufsicherung kann durch einen Formschlußeingriff in Gestalt von Querrippen, Schneidringen, Rillen, Nasen oder dergleichen bewirkt werden. Zweckmäßige Ausgestaltungen dieser Rücklaufsicherungen sind in den Unteransprüchen 2 bis 7 beschrieben.

Der Erfindung liegt ferner die Aufgabe zugrunde, mit Sicherheit zu gewährleisten, daß der Gleitkonus auch fest genug eingepreßt wird. Diese Aufgabe wird gelöst durch die im Anspruch 8 angegebenen Merkmale. Diese Montagehülse gewährleistet außerdem, daß nach der Montage der Gegenstand über die Mutter bzw. dem Bolzenkopf fest gegen das Mauerwerk verspannt werden kann.

Weitere zweckmäßige Ausgestaltungen der Montagehülse ergeben sich aus den Ansprüchen 9 und 10.

Durch die Erfindung wird gewährleistet, daß der Schwerlastanker auch dort Anwendung finden kann, wo der Gegenstand öfter montiert und wieder angeschraubt werden muß, wobei den Sicherheitsvorschriften Rechnung getragen wird, so daß mit dem erfindungsgemäßen Dübel auch zulassungspflichtige Montagen durchgeführt werden können.

Nachstehend wird ein Ausführungsbeispiel der Erfindung anhand der Zeichnung beschrieben. In der Zeichnung zeigen:

Figur 1 einen axialen Halbschnitt eines in ein Dübelloch eingesetzten, erfindungsgemäß ausgebildeten Schwerlastankers

Figur 2 eine der Figur 1 entsprechende Schnittansicht im verspannten Zustand und

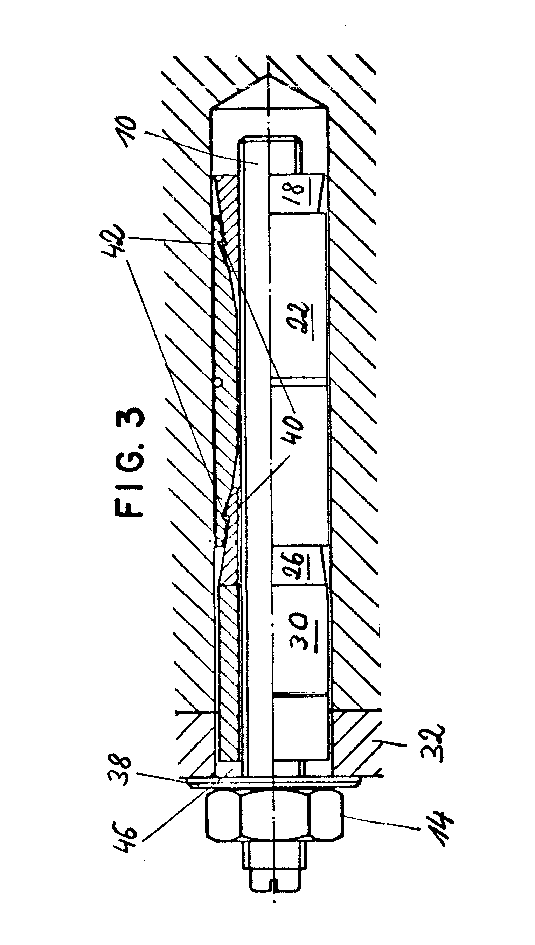

Figur 3 eine den Figuren 1 und 2 entsprechende Schnittansicht des Schwerlastankers nach Entfernung der Montagehülse und Festlegung des zu befestigenden Gegenstandes.

Der Schwerlastanker weist einen Gewindebolzen 10 auf, auf dessen vorderes, aus dem Bohrloch 12 vorstehendes Ende eine Mutter 14 aufgeschraubt ist. Stattdessen könnte der Gewindebolzen 10 auch als Kopfschraube mit einem festen Sechskantkopf ausgebildet sein. Der Gewindebolzen 10 weist vorn einen Schraubenziehereinsatzschlitz 16 auf. Auf das hintere Ende des Gewindebolzens 10 ist ein mit Innengewinde versehener Schraubkonus 18 aufgeschraubt, der von dem hinteren Innenkonus 20 einer axial ein- oder mehrfach geteilten Spreizhülse 22 umgriffen ist, deren vorderer Innenkonus 24 einen auf dem Gewindebolzen 10 gleitbaren Gleitkonus 26 teilweise umschließt. Die einzelnen Mantelteile der Spreizhülse 22 werden durch einen Sprengring 28 zusammengehalten.

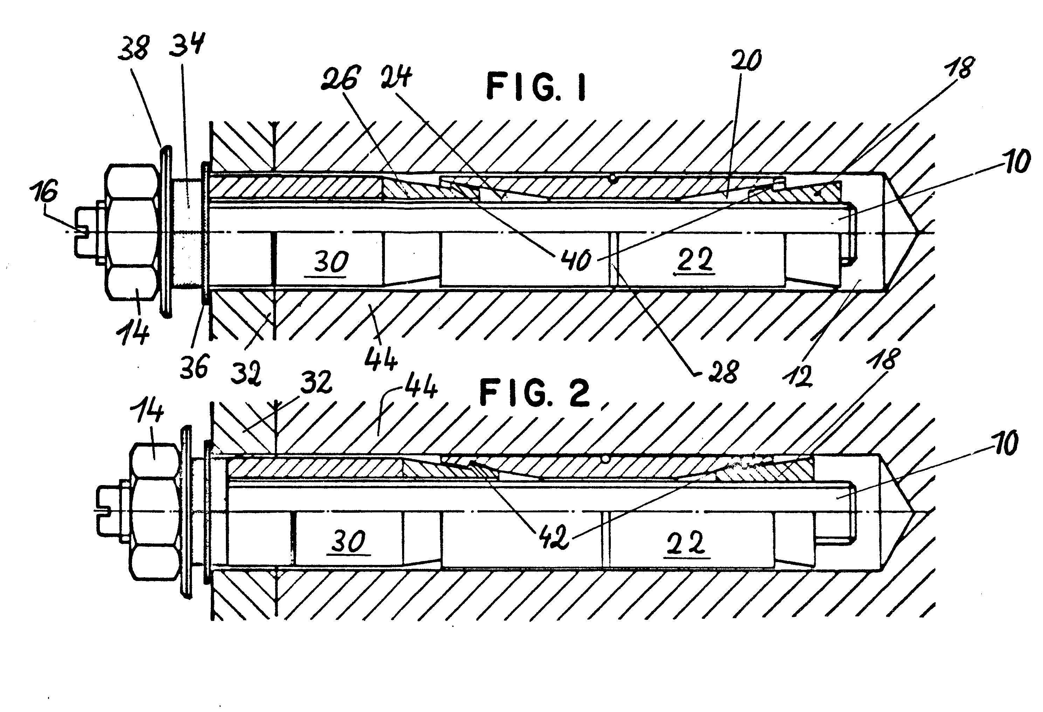

Anstelle des Sprengringes könnte auch ein Klebestreifen oder dergleichen vorgesehen sein. Stirnseitig an dem vorderen Gleitkonus 26 ist eine Distanzhülse 30 abgestützt. Der Schwerlastanker ist in das Bohrloch 12 eingeführt, wobei die Distanzhülse 30 beim Einführen gemäß Figur 1 mit ihrem vorderen Ende im Bereich des zu befestigenden Gegenstandes 32 liegt, der mit einem dem Bohrloch 12 im Durchmesser entsprechenden Loch versehen ist. Auf dem nach außen vorstehenden Teil des Gewindebolzens 10 ist ferner eine Montagehülse 34 aufgeschoben, die einen als Federring, Zackenring oder dergleichen ausgebildeten Flansch 36 aufweist. Zwischen der Montagehülse 34 und der Mutter 14 ist eine Unterlegscheibe 38 angeordnet.

Die Außenkonusfläche von vorderem Gleitkonus bzw. hinterem Schraubkonus ist mit einer Ringstufe 40 am inneren Abschnitt mit kleinerem Durchmesser ausgebildet und eine sägezahnförmige Rille bildet, die sich bei der axialen Verspannung in die innere Konusfläche 20 bzw. 24 der Spreizhülse eingräbt und eine entsprechend geformte Ringnut 42 bildet, die einen in axialer Richtung wirkenden Formeingriff zur Folge hat (Figur 2), so daß eine Axialverschiebung zwischen der Spreizhülse und den Konen auch dann verhindert wird, wenn die Mutter 14 vom Gewindebolzen abgeschraubt bzw. die Kopfschraube locker- oder herausgedreht wird. In jedem Fall bleibt die Spreizhülse gegen die Bohrlochwandung infolge der Konuswirkung verspannt.

Um eine axiale Verschiebung des Gewindebolzens gegenüber der Spreizhülse zu vermeiden, kann der vordere Konus 26 mittels einer starken Feder oder einem federnden Element bei der Montage in die Spreizhülse gedrückt werden. Dadurch kann ein dauernder Längenausgleich gewährleistet werden unter der Voraussetzung, daß die Federkraft dauernd erhalten bleibt. Da dies kaum zu realisieren ist, ist nach der Erfindung die Ringstufe 40 vorgesehen, wodurch sich bei der Montage eine Verbindung des gewindelosen Gleitkonus mit der Spreizhülse ergibt, die sich ihrerseits nach erfolgter Spreizung nicht mehr axial verschieben kann. Da der Konus axial gesichert innerhalb der Spreizhülse verbleibt, wird die einmal aufgebrachte Spreizkraft dauerhaft aufrecht erhalten. Um das Selbsteinschneiden bei der Montage zu begünstigen, können die Konen gehärtet sein.

Um zu gewährleisten, daß die Konen auch fest genug in die Spreizhülse eingepreßt werden, ist die Montagehülse 34 vorgesehen, die von einem einfachen Rohrabschnitt gebildet ist, der etwa den gleichen Außen- und Innendurchmesser wie die Distanzhülse 30 besitzt. Diese Montagehülse 34 wird über die Unterlegscheibe 38 und die Mutter 14 (oder den Schraubbolzenkopf) in Richtung auf den vorderen Konus 26 mit dem erforderlichen Drehmoment verschoben und drückt den Konus 26 über die Distanzhülse 30 sicher in die Spreizhülse 22 ein. Hierbei kann sich der Flansch 36 auf der Montagehülse wie aus Figur 2 ersichtlich verschieben.

Nach dem Andrehen kann die Montagehülse wieder entfernt werden und der Gegenstand 32 kann sicher gegen die Wand 44 verspannt werden, weil zwischen der Unterlegscheibe 38 und der Stirnseite der Distanzhülse 30 ein freier Ringraum 46 verbleibt.

Der Flansch 36 der Montagehülse 34 bildet eine Fiefenbegrenzung für Durchsteckmontagen wodurch gewährleistet wird, daß immer ein genügend langer Spreizweg vorhanden ist.

Patentansprüche

1. Schwerlastanker mit einem Gewindebolzen, einem hinteren, auf dem Gewindebolzen aufgeschraubten Schraubkonus, mit einem vorderen auf dem Gewindebolzen verschiebbaren Gleitkonus, mit einer innen doppelt konisch ausgebildeten Spreizhülse, die mit den beiden Konen zusammenwirkt und mit einer am vorderen Gleitkonus stirnseitig abgestützten Distanzhülse, dadurch gekennzeichnet, daß wenigstens zwischen dem vorderen Gleitkonus (26) und der Spreizhülse (22) eine axiale Rücklaufsicherung eingebaut ist.

2. Schwerlastanker nach Anspruch 1, dadurch gekennzeichnet, daß auch zwischen dem hinteren Schraubkonus (18) und der Spreizhülse (22) eine axiale Rücklaufsicherung vorgesehen ist.

3. Schwerlastanker nach den Ansprüchen 1 oder 2, dadurch gekennzeichnet, daß die Rücklaufsicherung durch einen axialen Formschlußeingriff (40,42) zwischen den zusammenwirkenden Konusflächen gebildet ist.

4. Schwerlastanker nach Anspruch 3, dadurch gekennzeichnet, daß die Außenkonusflächen des Gleitkonus (26) oder beider Konen (26,18) und/oder die Innenkonusfläche(n) (24;20) der Spreizhülse (22) mit Ringrillen, Vorsprüngen, Nasen oder dergleichen versehen sind.

5. Schwerlastanker nach Anspruch 3 oder 4, dadurch gekennzeichnet, daß eine der zusammenwirkenden Konusflächen mit selbstschneidenden Ringen oder Gewindegängen versehen ist, die sich bei der axialen Verspannung in das Gegenstück eingraben.

6. Schwerlastanker nach Anspruch 5, dadurch gekennzeichnet, daß der Querschnitt der selbstschneidenden Ringe zägezahnartig gestaltet ist.

7. Schwerlastanker nach Anspruch 6, dadurch gekennzeichnet, daß das Sägezahnprofil durch eine Ringstufe (40) gebildet ist, die im Bereich des kleineren Durchmessers an dem Gleitkonus (26) und/oder dem Schraubkonus (18) vorgesehen sind.

8. Schwerlastanker nach einem der Ansprüche 1 bis 7, dadurch gekennzeichnet, daß eine nach der Montage abnehmbare Montagehülse (34) vor der Distanzhülse (30) auf den Gewindebolzen (10) aufgesetzt ist.

9. Schwerlastanker nach Anspruch 8,
dadurch gekennzeichnet, daß die Montagehülse
(34) einen Stützflansch (36) aufweist.

10. Schwerlastanker nach Anspruch 9,
dadurch gekennzeichnet, daß der Flansch (36)
als Federring, Zackenring oder dergleichen
ausgebildet ist.

FIG. 1

FIG. 2

0062280

# FIG. 3

0062280

Europäisches
Patentamt

**EUROPÄISCHER RECHERCHENBERICHT**

0062280

Nummer der Anmeldung

EP 82 10 2654.9

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| X,Y | DE – A1 – 2 505 402 (TORNADO) <br> * Ansprüche 1 bis 5 * <br> --- | 1-9 | F 16 B 13/06 |
| X,Y | DE – A1 – 2 701 510 (UPAT) <br> * Fig. 37 * <br> --- | 1-9 | |
| X,Y | DE – U – 7 636 399 (TORNADO) <br> * Seite 2, Absatz 4 * <br> --- | 1-9 | |
| X,Y | CH – A – 174 966 (MEIER) <br> * Seite 2 , Zeilen 19,20, 30 * <br> --- | 1-9 | **RECHERCHIERTE SACHGEBIETE (Int. Cl.³)** |
| Y | AT –B – 295 814 (FISCHER) <br> * Anspruch 3 * <br> --- | 6 | F 16 B 13/06 |
| Y | FR – A – 476 982 (ADLER) <br> * Fig. 2 * <br> --- | 6 | |
| Y | CH – A – 493 749 (KRAUSS) <br> * Fig. 1 * <br> --- | 8 | |
| Y | CH – A5 – 561 861 (LIEBIG) <br> * Fig. 1 * <br> --- | 8 | |
| Y | AT – B – 337 959 (FISCHER) <br> * Fig. 1 * <br> --- | 9 | |
| Y | DE – U – 7 238 210 (IMPEX-ESSEN VERTRIEB VON WERKZEUGEN) <br> * Fig. 1 * <br> ---- | 9 | |

| | | | |
|---|---|---|---|
| X | Der vorliegende Recherchenbericht wurde für alle Patentansprüche erstellt. | | |
| **Recherchenort** <br> Berlin | **Abschlußdatum der Recherche** <br> 09-06-1982 | **Prüfer** <br> ZAPP | |

EPA form 1503.1    06.78